# EUROPEAN PATENT APPLICATION

(11) **EP 3 324 313 A1**
(43) Date of publication of application: **23.05.2018**
(21) Application number: 17203160.1
(22) Date of filing: 22.03.2012
(51) Int. Cl.: G06F 17/30

(54) **AUGMENTED REALITY DATA CENTER VISUALIZATION**

(30) Priority: 22.03.2011 US 201161466355 P; 21.03.2012 US 201213426065
(62) Divisional of application: 12714431.9
(71) Applicant: Panduit Corp, Tinley Park IL 60487 (US)
(72) Inventor: TISON, Jack, Wilmington, IL Illinois 60481 (US); Smolinski, Zachary, Homer Glen, IL Illinois 60491 (US); O'DONNELL, John, Frankfort, IL Illinois 60423 (US); DOORHY, Brendan, Westmont, IL Illinois 60559 (US)
(74) Representative: Harden, Henry Simon

(57) **Abstract**

Datacenter datasets and other information are visually displayed in an augmented reality view using a portable device. The visual display of this information is presented along with a visual display of the actual datacenter environment. The combination of these two displays allows installers and technicians to view instructions or other data that are visually correlated to the environment in which they are working.

## Description

### Background of the Invention

The data center is a highly dynamic environment which requires multiple disciplines and technology owners to manage. Typically, different departments within a company are responsible for managing different functions, deployments, and operations; such as: space allocation, storage, network asset availability, server provisioning, and facilities management.

The sharing of information between these groups is often accomplished through manual data entry in spreadsheets and other static-view software tools such as AutoCad, MS Visio, and Aperture. This combination of manual entry and static-view tools can result in the presentation of outdated information to people who need updated information for a variety of tasks. Such tasks may include the installation or relocation of hardware, or the installation or movement of connections between existing network components.

There is a need for a system that combines up-to-date system information with the ability to present this information to key technical personnel in a highly useful format.

### Summary of the Invention

Accordingly, in one embodiment, the present invention is a system for reporting data about a network datacenter to a user, said system comprising an appliance adapted to provide said data about equipment in said network datacenter to said user in a data view, said appliance providing said data in combination with a real-time visual depiction of datacenter hardware, such that said data view is visually overlaid with said visual depiction of datacenter hardware in an augmented reality overlay.

In another embodiment, the present invention is a system for reporting data about at least a portion of a premises having telecommunication equipment therein, said system comprising: at least one trackable indicator having tracking information embedded therein; and an appliance adapted to display said data in response to acquiring said tracking information.

### Brief Description of the Drawings

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a depiction of information that can be shown to a user using an augmented reality system according to some embodiments of the present invention;
Fig. 2 shows an augmented reality display according to one embodiment of the present invention;
Fig. 3 illustrates items relevant to work orders according to one embodiment of the present invention;
Fig. 4 shows an augmented reality view according to one embodiment of the present invention;
Fig. 5 is a combination illustration showing the use of trackable indicators according to one embodiment of the present invention;
Fig. 6 illustrates a portable device showing a plan view according to one embodiment of the present invention; and
Figs. 7A-7H are illustrations of a portable device guiding a technician according to one embodiment of the present invention.

Corresponding reference characters indicate corresponding parts throughout the several views. The exemplification set out herein illustrates preferred embodiments of the invention, in one form, and such exemplification is not to be construed as limiting the scope of the invention in any manner.

### Detailed Description of Embodiments

Systems and methods according to some embodiments of the present invention combine augmented reality tools with network design and operational tools to provide a seamless and holistic view of data center operations, network uptime or bandwidth capability, environmental, and infrastructure status. In one embodiment of the present invention, a handheld visualization tool, such as a handheld device combining a camera with a video display, is used to combine a real-world view as seen by the camera with a computer-provided overlay of data or images relevant to the real-world view. Such a combination of features gives rise to a number of advantages.

One advantage of the present system is that data center planning before groundbreaking or procurement of assets can be done more efficiently. This arises because, for example, a real-world view of a data center space can be combined with a virtual view of data center assets. This enables a space-efficient correspondence between the data center space and the assets to be installed in the data center.

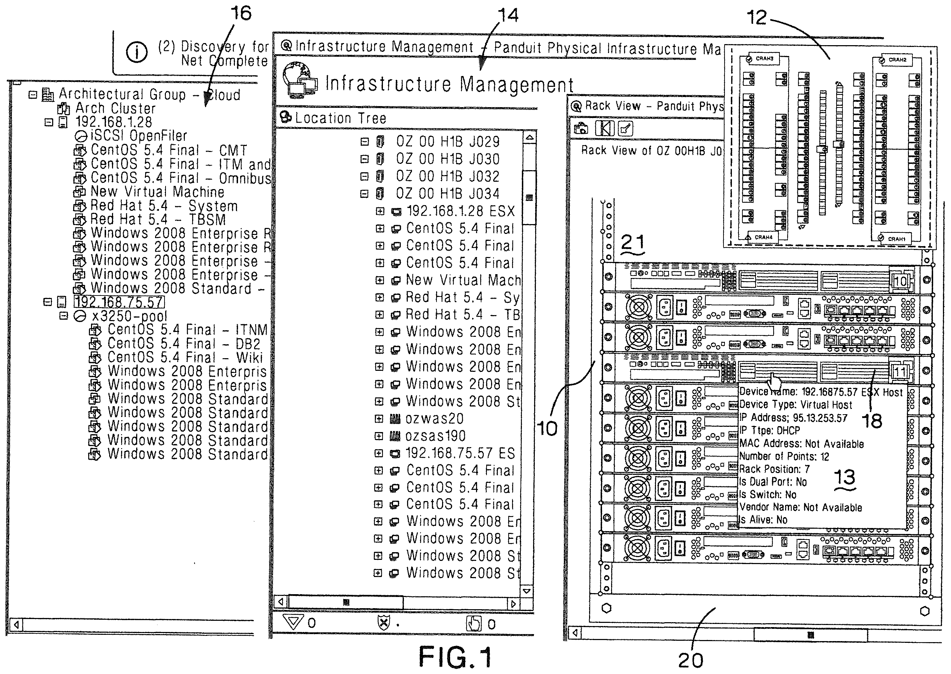

Another advantage of the present system is increased operational efficiency during moves, adds, and changes (MAC's) in connectivity in the data center. Further, both macro and micro views of data center information can provide the user with large data perspective viewing, while also enabling the user to drill down into micro-level information. This may be accomplished through a "fly" feature which allows the user to have a 3D view from above the Augmented Reality (AR) visuals (see Fig. 1), allowing a user to quickly travel between virtual locations using a display without needing to walk between the locations. Such a view allows the user to walk around through the datacenter and have the ability to pull up a series of views (application view, temperature view, powerview, planned view) dynamically as the user is moving through a potentially large environment.

Very precise locational guidance can be employed in the data center for use in multiple scenarios, including: work order deployment, hardware implementation mapping, port connectivity, virtual machine mapping, virtual machine transforms to multiple servers, technician deployment to a problem area in the datacenter, security violations, emergency response, and user asset deployment.

In different embodiments, multiple appliances may be used for viewing the visual data, including augmented reality (AR) glasses, virtual reality goggles, or a handheld device such as a PDA, which may be pointed at particular device, cabinet, or area in the data center in order to acquire information about the particular item.

Fig. 1 is a depiction of information that may be provided to a user via AR. Using the AR glasses the user would approach the rack or cabinet and, upon focusing on a particular device, pull up environmental or power data. As is seen in Fig. 1, the user can choose different devices from the rack view 10, and by using the AR software, extract different data relevant to the specific hardware selected by the user.

The user may choose connectivity data, and see end-to-end connectivity mapping of devices visually through the AR glasses. Fig. 1 also shows a "lift" view feature 12 (showing the top down look at the data center). This allows the user to pull up information, for example in an information view 13, by visually picking a certain rack or cabinet from the top-down view: from there the user could obtain rollup data for the particular cabinet, or pull up a 2D elevation view to pick certain devices for monitoring. This may be useful for very large data centers, and for efficient navigation through a data center. Also shown in Fig. 1 is an infrastructure management view 14 that enables the user to see a physical location tree topology view for items selected from the AR view. A virtual machine logical view 16 allows for the visualization of virtual machines as they are executed on hardware within the view of the AR device.

In the rack view 10 of Fig. 1, a server 18 to be added to the rack 20 is inserted by the AR system into the rack view 10, providing the technician with a view of the rack 20 as it will look following installation of the server 18. Also visible in Fig. 1 is an AR view of reserved space 21 in the rack 20. As shown in Fig. 1 the user has the ability with Augmented Reality (AR) to view information live in their immersive environment for asset tracking within a specific location in the data center. Further, an AR view may be used to overlay step-by-step instructions for installing hardware such as screws, cable managers, data cables, power cables, and labels.

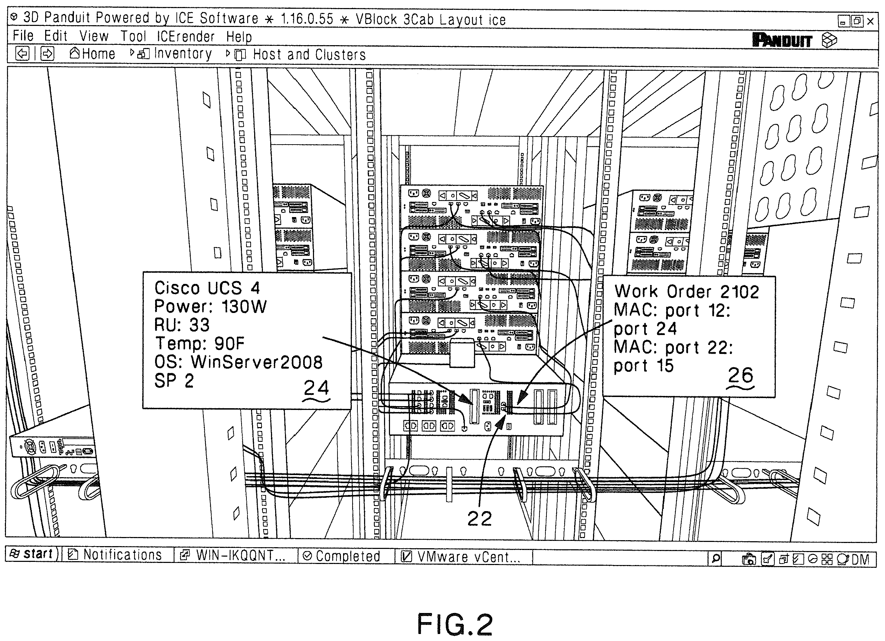

The AR data center software may display both passive and active (real-time) data. For example, power data may be displayed over each specific device hovered over (either with AR goggles, or with a user interface on a handheld device). In addition, port-level connectivity information may be provided by a connectivity management device (such as a Panduit PViQ device) and displayed as a HUD (heads up display). An example of such a view is shown in Fig. 2, where traces 22 on an AR display give a visual indication of connections between different prices of hardware.

Application layer information may be displayed on a per-device basis. Such information may include information on the operating system (OS) in use, information on the virtual machines installed on specific blade servers, and information on end-to-end port connectivity, software applications installed, and SLA(Software Licensing Agreement, Service Level Agreement) auditing.

Cabinet-level, rack-level, and room-level data/environmental/power data aggregations, or "rollups" may also be displayed in the AR software environment. For example, an AR view may be used to illustrate to a user the power dissipation by a room in a data center, a row of cabinets, or a particular rack. The temperature distribution in a room may be displayed visually. AR data center software may be used for move, add, change (MAC) deployment and confirmation of cabling and connectivity change with work order software such as Panduit's work order software or through integration with other third party vendors. Fig. 2 shows AR data displays 24 and 26. The information data display 24 shows information about a server, and the work order data display 26 shows the ports that are involved in a MAC operation.

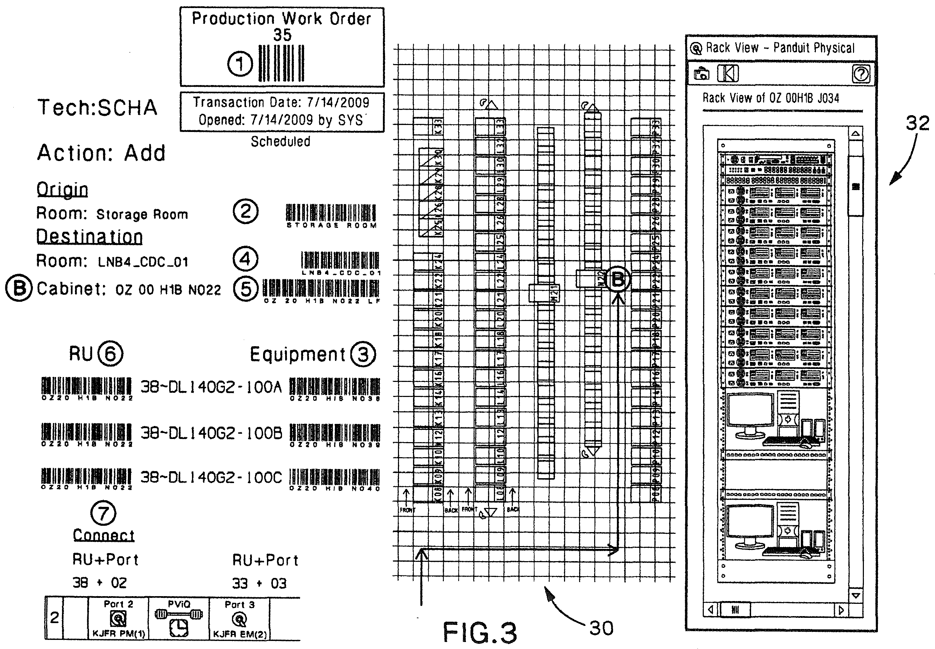

AR data center software coupled with a physical layer information system such as the Panduit PIM Physical Infrastructure Management system could visually guide technicians in many activities such as server provisioning and server decommissioning, with visual confirmation from the physical layer information system that connectivity is accomplished and being tracked. For example, Fig. 3 shows instructions and views involved in a work order according to one embodiment of the present invention.

Item 1 in Fig. 3 is a work order bar code, containing identification information about the work order itself. The work order illustrated in Fig. 3 is instructing a technician to install three pieces of equipment, listed at item 3, and make a connection between two of those pieces. Item 2 shows where the pieces can be found, and items 4 and 5 respectively show the room and cabinet where the pieces are to be installed. Item 6 in Fig. 3 is a bar code listing of the rack unit (RU) locations where each piece is to be installed. Item 7 shows the technician a connection that is to be made between two of the pieces. A map 30 can be provided to guide the technician to the correct cabinet location, B, for the installation. An elevation view 32, overlayed in an AR view, is provided to show the existing work order.

AR data center software coupled with a physical layer information system visually provides technicians with "what if," scenarios that would result from deploying certain devices into a cabinet. Factors such as the impact of the installation on the health of cabinet and power usage can be displayed. Further, reserved space for future build outs can be shown on an AR display, as can the end state scenario of an installation.

AR data center software coupled with a physical layer information system may also visually provide technicians with port availability in certain pods to allow for quick decision-making for network connectivity at the patch field level.

In one embodiment of the present invention, AR technology is combined with data center information to enable more efficient data center construction. In this embodiment, contractors wear AR glasses that contain construction details. Step by step construction information is fed from multiple sources (such as AutoCad drawings, HVAC drawings, Work Order systems, and the like) such that the installers can visually see directionally where and how components should be deployed and in what order. Connection points and other details can be provided to the installer via the AR glasses.

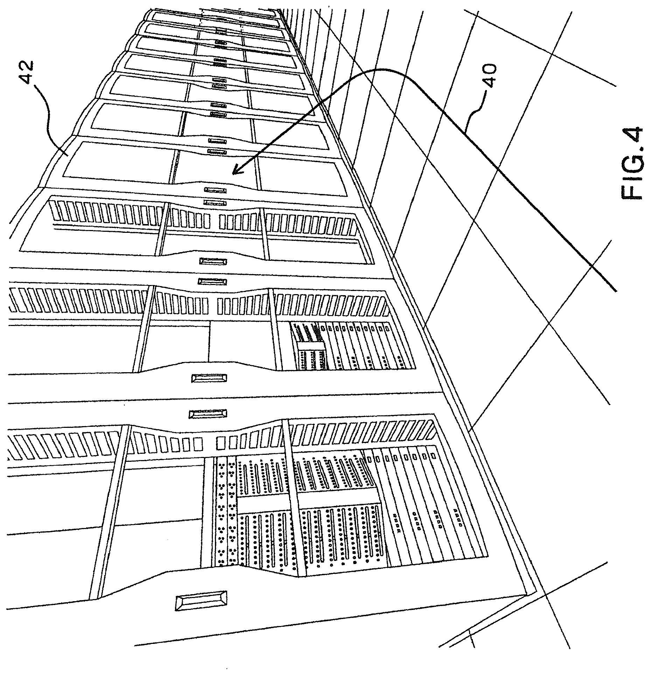

In some embodiments of the present invention, technicians are guided visually through an AR data center environment to execute work orders. This allows the technician to view the work order details, as shown in Fig. 3, in the AR environment. The technician is then visually guided through the data center to the correct area, cabinet, or piece of equipment to complete the work. This visual guidance is shown in Fig. 4, with arrow 40 in an AR view showing a technician the proper cabinet 42 where a work order is to be performed.

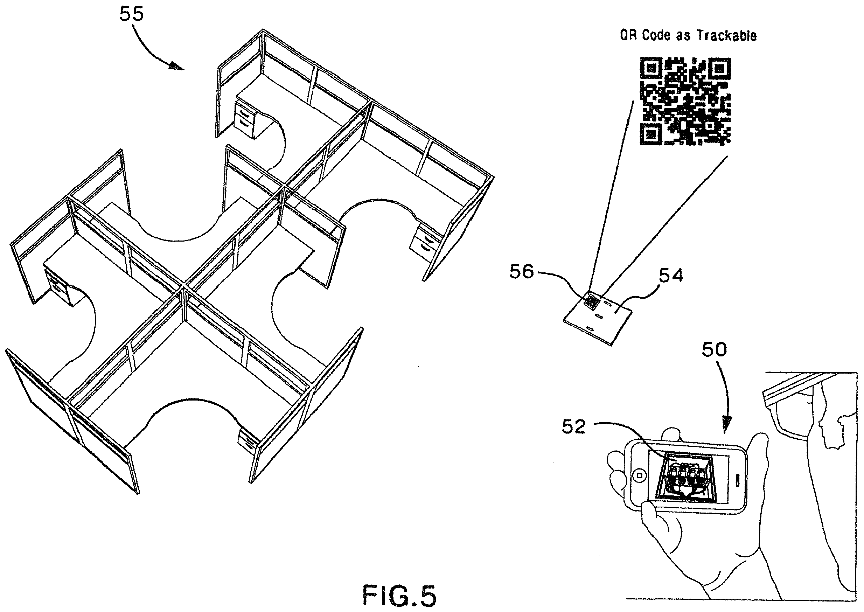

Fig. 5 shows an example implementation of an AR system according to one embodiment of the present invention. In the embodiment of Fig. 5, a portable device 50 is used to display an AR view 52 of hardware installed within a zone box 54 without needing to physically open the zone box 54. In this illustration, the zone box 54 contains hardware enabling the connectivity of network equipment within nearby cubicles 55. A trackable indicator 56, such as a QR code, is within the view of a camera provided on the portable device 50. This, in turn, allows the AR software to display an image along with other information regarding the hardware stored within the zone box 54.

AR data, such as the image display in Fig. 5 or connectivity information to be displayed in an AR view, can be acquired by the portable device or other AR viewer via communication with a database. Data for presentation on the AR-enabled device 50 can be acquired from a main database. Asset tracking features within a physical infrastructure management system (such as RFID, barcode, or switch uplink methods) may be used to keep the database up-to-date. Once the AR-enabled device recognizes a particular identifier (such as the indicator 56), the device pulls relevant data from a database (either internal or wirelessly) and displays the AR overlay in the AR view 52. The data to be viewed may be selected by the user via a menu.

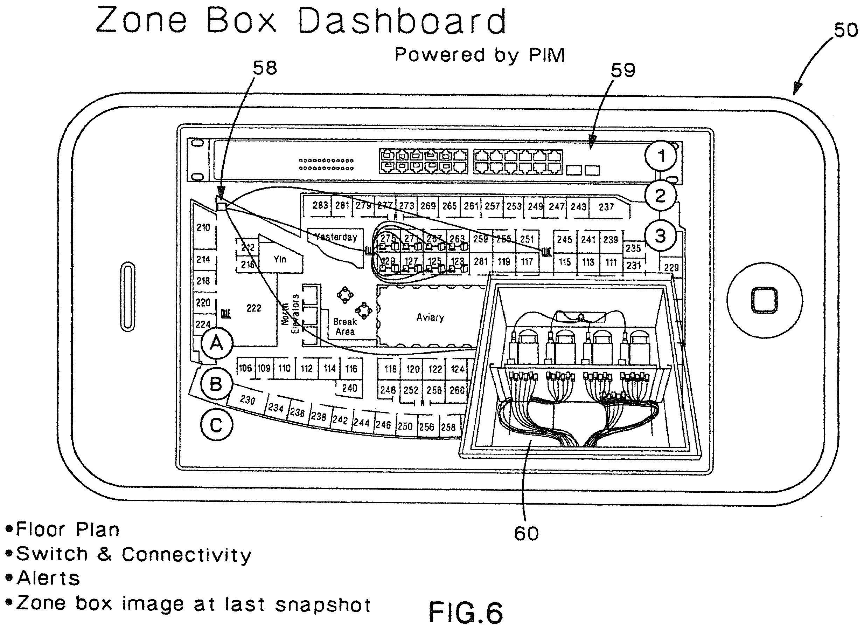

Fig. 6 shows the portable device 50 with a connectivity plan view 58 illustrating the connections between zone boxes and network equipment in cubicles. The zone box image 60 may be a snapshot illustrating the last known view of the zone box that the portable device 50 is pointed at. The connectivity plan view illustrates the floor plan of the area selected by the user. A switch display 59 may be provided simultaneously to show the switch ports that service the location shown in the connectivity plan view 58. Alerts may also be provided in these views, for example to illustrate connectivity problems.

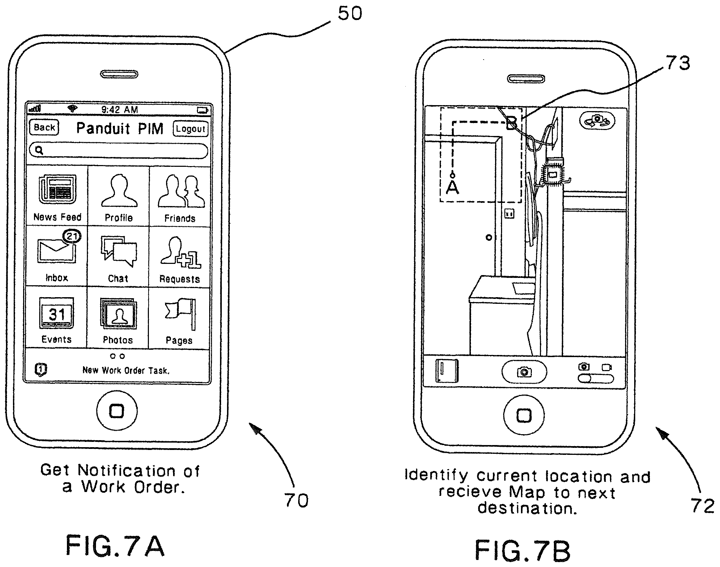

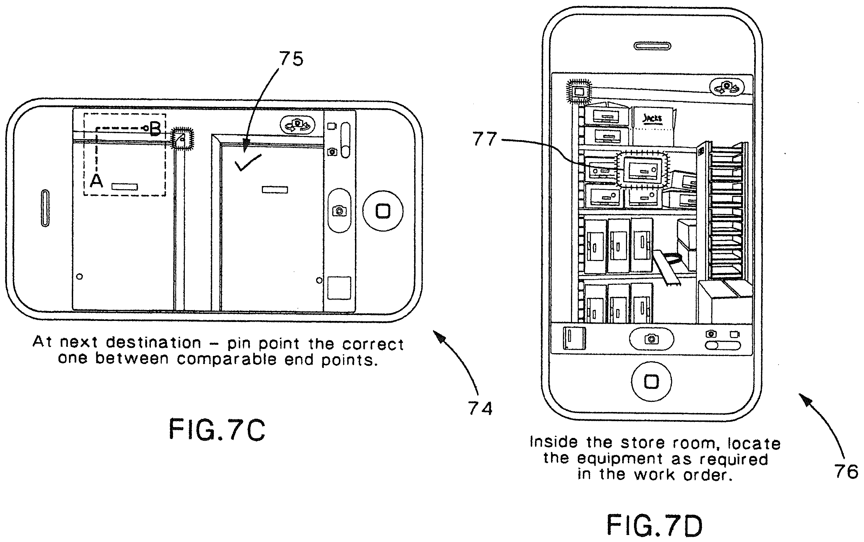

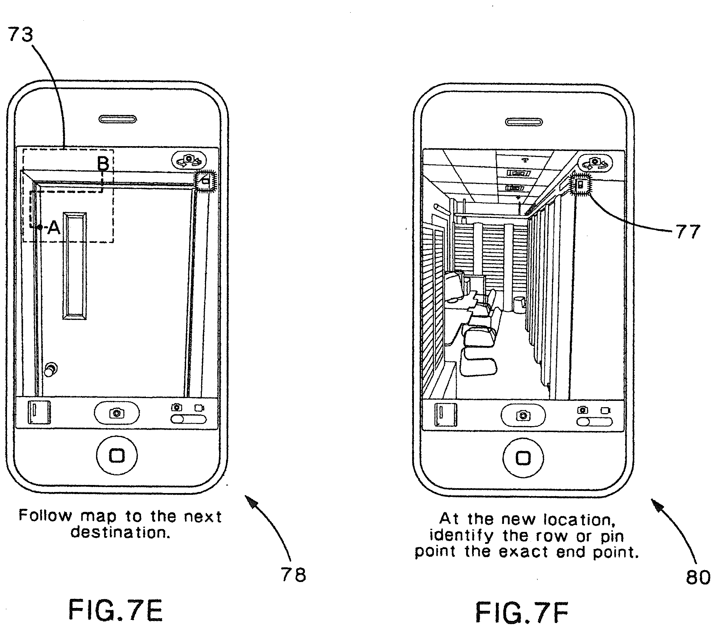

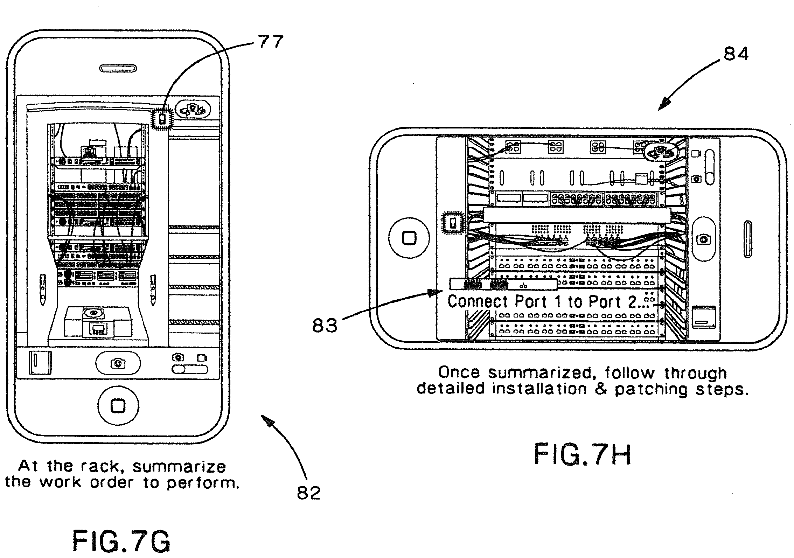

Fig. 7 shows a series of views on a portable device 50 guiding a technician through a work order that requires the installation of network equipment. In a first view 70, the technician receives a notification of a work order. Next, as shown in view 72, the technician's location is determined and a map illustration 73 is shown on the device, illustrating the path for the technician to take to the location of the needed equipment to complete the work order. Next, as shown in view 74, the AR view is used to place an indicator 75 on the screen showing the correct endpoint when more than one comparable end point is in view of the camera on the device 50. When the correct store room is entered, as shown in view 76, the camera on the device uses indicia provided on inventory to place an indicator 77 on the equipment needed to fulfill the work order.

Once the technician has confirmed pickup of the correct equipment, the map illustration 73 is used to indicate the path to the destination where the equipment is to be installed, as shown in view 78. Next, an indicator 77 is shown on the display 80 to indicate the correct row where the equipment is to be installed. As the technician approaches the rack, the indicator 77 indicates the correct rack as shown in vie 82. Finally, a connection display 83 guides the technician through the correct installation of the equipment as shown in view 84. Once the MAC has been verified (via switch uplink or other means), the whole system is updated to reflect the change and maintain an accurate representation of the environment in the database.

While particular embodiments of the present invention have been shown and described, it will be obvious to those skilled in the art that changes may be made to these embodiments without departing from the teachings of our invention. The matter shown and described is offered by way of illustration only and not as a limitation.

Further embodiments of the present disclosure are set out in the following clauses:
1. A system for reporting data about a network datacenter to a user, said system comprising:
   an appliance adapted to provide said data about equipment in said network datacenter to said user in a data view, said appliance providing said data in combination with a real-time visual depiction of datacenter hardware, such that said data view is visually overlaid with said visual depiction of datacenter hardware in an augmented reality overlay.
2. The system of clause 1 wherein said appliance comprises augmented reality glasses.
3. The system of clause 1 wherein said appliance comprises a handheld device.
4. The system of clause 1 wherein said data view is an infrastructure management view that depicts a physical location tree topology for items selected from the augmented reality overlay.
5. The system of clause 1 wherein said data view is a virtual machine logical view that depicts a visualization of virtual machines as they are executed on hardware within the view of the appliance.
6. The system of clause 1 wherein said data view displays to said user a depiction of the expected results of a completed work order.
7. The system of clause 1 wherein said appliance recognizes one or more identifiers and associates said identifiers with data retrieved from a database.
8. A system for reporting data about at least a portion of a premises having telecommunication equipment therein, said system comprising:
   at least one trackable indicator having tracking information embedded therein; and
   an appliance adapted to display said data in response to acquiring said tracking information.
9. The system of clause 8, wherein said at least one trackable indicator is physically affixed in the approximate area of said at least a portion of a premises.
10. The system of clause 8, wherein said trackable indicator is a visual trackable indicator.
11. The system of clause 10, wherein said appliance visually acquires said tracking information.
12. The system of clause 8, wherein said data comprises last-known, or real-time information about said telecommunication equipment, or information regarding the equipment as it will look after an installation.
13. The system of clause 12, wherein said data further comprises a pictorial representation of said telecommunication equipment.
14. The system of clause 13, wherein said pictorial representation is overlaid with a real-time view of said user's direct sight.
15. The system of clause 8, wherein upon acquiring said tracking information said appliance queries a database to obtain said data.

## Claims

1. A method for guiding a technician through a work order using a portable device having a camera and a display, the work order requiring the installation of network equipment in a rack in a data center, the method comprising:
displaying, on the display of the portable device, a real-world view as seen by the camera of the portable device simultaneously with an augmented reality overlay over the real-world view;
receiving, at the portable device, a notification of the work order for installation of network equipment in a data center;
determining a location of the technician;
displaying, in the augmented reality overlay, a first map illustrating a path for the technician to take from the technician's determined location to a location of the network equipment needed to complete the work order;
when more than one comparable end points of the path to the location of the network equipment are in the real-world view, displaying, in the augmented reality overlay, an indicator showing the correct end point;
when the location of the network equipment is reached, using indicia on the network equipment in the real-world view to display an indicator on the network equipment in the augmented reality overlay;
in response to determining that the technician has collected the network equipment, displaying, in the augmented reality overlay, a second map illustrating a path for the technician to take from the location of the network equipment to a location where the network equipment is to be installed;
displaying, in the augmented reality overlay, an indicator showing which cabinet row the rack in which the network equipment is to be installed is located;
as the technician approaches the rack, displaying an indicator on the rack in the augmented reality overlay;
guiding, using the augmented reality overlay, the technician in installing the network equipment in the rack;
verifying the installation of the network equipment in the rack; and
updating a database to reflect the completed installation.

2. The method of claim 1, wherein the portable device is a handheld device.

3. The method of claim 1, wherein the portable device is a pair of augmented reality glasses.

4. The method of claim 1, wherein the installation of the network equipment in the rack is verified using a switch uplink.

5. The method of claim 1, wherein guiding, using the augmented reality overlay, the technician in installing the network equipment in the rack comprises:
displaying, in the augmented reality overlay, connection points for connecting the network equipment in the rack.
